# EUROPÄISCHE PATENTSCHRIFT

(11) **EP 2 165 908 B1**
(45) Veröffentlichungstag und Bekanntmachung des Hinweises auf die Patenterteilung: **13.04.2011**
(21) Anmeldenummer: 09170995.6
(22) Anmeldetag: 22.09.2009
(51) Int. Cl.: B61D 17/20

(54) **Fahrzeugübergang**
Communication passage for a vehicle
Passage d'intercirculation pour un véhicule

(30) Priorität: 23.09.2008 AT 5192008
(43) Veröffentlichungstag der Anmeldung: 24.03.2010
(73) Patentinhaber: Ultimate Transportation Equipment GmbH, 3300 Amstetten (AT)
(72) Erfinder: Teufl, Manfred, 3332 Rosenau (AT)
(74) Vertreter: KLIMENT & HENHAPEL

(56) Entgegenhaltungen:
- DE-C- 539 581
- DE-C- 806 859
- DE-C2- 2 757 201

## Beschreibung

Die Erfindung bezieht sich auf einen Übergang zwischen zwei gelenkig miteinander verbundenen Fahrzeugteilen eines Schienenfahrzeugs, wobei zwischen den Fahrzeugteilen eine Gliederbrücke angeordnet ist, welche mehrere stabförmige Trittglieder aufweist, deren Endbereiche jeweils gelenkig an einem Rahmenelement angelenkt sind, wobei die Gliederbrücke in einem ersten Endbereich an einem der beiden Fahrzeugteile bzw. an einem diesem zugeordneten Trägerelement und in einem zweiten Endbereich am anderen der beiden Fahrzeugteile bzw. an einem diesem zugeordneten Trägerelement angelenkt ist, wobei die Gliederbrücke von einem einen Übergangskanal zwischen den Fahrzeugteilen ausbildenden Faltenbalg umgeben ist und wobei am Faltenbalg einander gegenüberliegende Seitenabdeckelemente angeordnet sind, welche die in Betriebsposition befindliche Gliederbrücke im Bereich zweier zum Faltenbalg benachbarter Gliederbrücken-Seitenabschnitte zumindest abschnittsweise überlappen, gemäß dem Oberbegriff des Anspruchs 1 sowie eine Gliederbrücke gemäß dem Oberbegriff des Anspruchs 11.

Gattungsgemäße Übergange (wie z.B. aus der DE 806 859 C oder der DE 27 57 201 C2 bekannt) werden im allgemeinen Personen- und Güterverkehr eingesetzt, um Fahrgästen einen gefahrlosen Übertritt zwischen zwei in bekannter Weise miteinander gekuppelten Fahrzeugteilen eines Schienenfahrzeugs zu ermöglichen.

Zwischen den beiden Fahrzeugteilen, genauer gesagt zwischen einem ersten, z.B. in Form einer Traverse ausgeführten Anschlusselement, welches am ersten Fahrzeugteil befestigt ist und einem zweiten Anschlusselement, welches am zweiten Fahrzeugteil befestigt ist, ist in horizontaler Richtung, also in Richtung der Fahrzeug-Längsachse, ein Abstand ausgebildet, welcher mittels einer Brückenvorrichtung überbrückt wird.

Die Größe dieses zu überbrückenden Abstandes richtet sich nach der konstruktiven Ausgestaltung des Übergangs und der Anschlusselemente, der Art des Kupplungsmechanismus der Fahrzeugteile sowie dem maximalen Schwenkwinkel der Fahrzeugteile und damit auch der Anschlusselemente zueinander während einer Kurvenfahrt des Schienenfahrzeugs.

Um im Zuge des Schienenfahrzeugbetriebs auftretende Relativbewegungen der Fahrzeugteile gut kompensieren zu können, ist die Brückenvorrichtung als Gliederbrücke ausgeführt, welche sich aus mehreren stabförmigen Trittgliedern konstituiert, deren Endbereiche jeweils gelenkig an einem Rahmenelement der Gliederbrücke angelenkt sind.

Der prinzipielle Aufbau einer derartigen Gliederbrücke ist aus der EP 0 331 121 B1 bekannt. Die stabförmigen Trittglieder weisen z.B. ein I-förmiges Querschnittsprofil auf und sind in Längsrichtung des Übergangs aneinandergereiht bzw. deren Längsachsen verlaufen in Querrichtung des Übergangs. Eine bevorzugte Anordnungsmöglichkeit ist es, Trittglieder mit unterschiedlicher Querschnittshöhe vorzusehen, wobei jedes zweite Trittglied beweglich zwischen im Wesentlichen horizontal verlaufenden Flanschstegen jeweils benachbarter Trittglieder gehalten ist. Derart ineinander verschachtelte Trittglieder tragen sich gegenseitig bzw. leiten eine auf deren Oberseite ausgeübte Gewichtsbelastung auch an die jeweils benachbarten Trittglieder weiter, sodass sämtliche Trittglieder gemeinsam eine relativ stabile Gliederbrücke konstituieren.

Tritt während des Fahrzeugbetriebs ein Querversatz der Fahrzeugteile auf, so können sich die an den Rahmenelementen angelenkten Trittglieder relativ zueinander verschieben bzw. in horizontaler Richtung verschwenken.

Die Gliederbrücke kann endseitig auf jeweils einem Trägerelement, z.B. einer Traverse oder einer Bodenplatte eines Fahrzeugteils angelenkt sein bzw. aufliegen. Die Gliederbrücke bzw. die Trittglieder können in einem zwischen deren Endbereichen liegenden mittleren Bereich auch an einer die beiden Fahrzeugteile miteinander verbindenden Kupplungsvorrichtung bzw. auf einer sonstigen Stützvorrichtung auflagern.

Der Übergang umfasst des Weiteren einen aus einem elastischen Material, z.B. aus Gummi gefertigten Faltenbalg, welcher die Gliederbrücke samt einem darüber befindlichen, etwa mannshohen Raum ummantelt und insofern einen Übergangskanal ausbildet, welcher den Fahrgast vor Außeneinflüssen wie Wind, Regen und Lärm schützt. Wenn im weiteren Zusammenhang der Erfindung von einem Faltenbalg die Rede ist, sind mit diesem Begriff auch sämtliche gattungsgemäß verwandten Einrichtungen zur Umhüllung eines Übergangskanals, insbesondere die sogenannten "Wellenbalge" umfasst.

Um ein Einklemmen von Gegenständen oder Körperteilen zwischen den Seitenabschnitten der während des Fahrzeugbetriebs bewegten Gliederbrücke und dem Faltenbalg zu verhindern, weist der Faltenbalg einander gegenüberliegende bzw. seitlich des Übergangskanals, im Wesentlichen parallel zur Längsachse des Übergangs bzw. der Gliederbrücke verlaufende Seitenabdeckelemente auf. Die zum Faltenbalg benachbarten Seitenabschnitte der im Betriebszustand befindlichen Gliederbrücke werden von den Seitenabdeckelementen des Faltenbalgs zumindest abschnittsweise überlappt.

Um eine Wartung des zwischen den Fahrzeugteilen vorgesehenen Kupplungsmechanismus zu ermöglichen, muss die Gliederbrücke aus ihrer im Wesentlichen horizontalen Betriebsposition hochgehoben bzw. in eine Wartungsposition befördert werden.

Als problematisch erweist sich hierbei der Umstand, dass beim Hochheben der Gliederbrücke in deren Wartungsposition die einander gegenüberliegenden Seitenabdeckelemente des Faltenbalgs auseinandergedrückt bzw. zusammengequetscht werden müssen. Ebenso erfolgt auch beim Wiederabsenken der Gliederbrücke in deren Betriebsposition ein Passieren der Seitenabdeckelemente des Faltenbalgs und ein damit einhergehendes Auseinanderdrücken bzw. Zusammenquetschen ebendieser. Wurden am Faltenbalg bzw. an dessen Seitenabdeckelementen mehrere solche Prozeduren vollzogen, kann dies den Faltenbalg beschädigen bzw. ein Brüchigwerden des Faltenbalgs im Bereich der Seitenabdeckelemente zur Folge haben. Jedenfalls geht mit einem Befördern der Gliederbrücke in deren Wartungsposition und zurück in deren Betriebsposition eine Verkürzung der Lebensdauer des Faltenbalgs einher.

Als weiterer Nachteil konventioneller Fahrzeugübergänge muss angeführt werden, dass ein Befördern der Gliederbrücke in deren Wartungsposition bzw. zurück in deren Betriebsposition jeweils der Hilfe mehrerer Personen bedarf, da die zumeist aus einem Gummiwerkstoff gefertigten Seitenabdeckelemente des Faltenbalgs dieser Manipulation einen beträchtlichen Widerstand entgegensetzen.

Es ist daher das Ziel der vorliegenden Erfindung, ein einfaches und schnelles Befördern einer eingangs beschriebenen Gliederbrücke in deren Wartungsposition und in deren Betriebsposition zu ermöglichen, ohne dass hierbei ein Verschleiß des Faltenbalgs erfolgt bzw. ohne dass dieser gequetscht werden muss.

Des weiteren soll die Notwendigkeit entfallen, die gesamte Gliederbrücke hochschwenken zu müssen, um in definierten Abschnitten unterhalb der Gliederbrücke liegende An- bzw. Einbauelemente zu erreichen bzw. zu warten.

Erfindungsgemäß werden diese Ziele durch einen Übergang mit den kennzeichnenden Merkmalen des Anspruchs 1 und eine Gliederbrücke mit den kennzeichnenden Merkmalen des Anspruchs 11 erreicht.

Ein gattungsgemäßer Übergang umfasst eine zwischen zwei gelenkig miteinander verbundenen Fahrzeugteilen eines Schienenfahrzeugs angeordnete Gliederbrücke, welche mehrere stabförmige Trittglieder aufweist, deren Endbereiche jeweils gelenkig an einem Rahmenelement angelenkt sind. Vorzugsweise überlappen benachbarte Trittglieder einander hierbei im Bereich von Kontaktabschnitten kontaktierend. Die Gliederbrücke ist in einem ersten Endbereich an einem der beiden Fahrzeugteile bzw. an einem diesem zugeordneten Trägerelement und in einem dem ersten Endbereich gegenüberliegenden zweiten Endbereich am anderen der beiden Fahrzeugteile bzw. an einem diesem zugeordneten weiteren Trägerelement angelenkt, wobei die Gliederbrücke von einem einen Übergangskanal zwischen den Fahrzeugteilen ausbildenden Faltenbalg umgeben ist. Am Faltenbalg sind einander gegenüberliegende Seitenabdeckelemente angeordnet, welche die in Betriebsposition befindliche Gliederbrücke im Bereich zweier zum Faltenbalg benachbarter Gliederbrücken-Seitenabschnitte zumindest abschnittsweise überlappen.

Erfindungsgemäß ist es vorgesehen, dass die Gliederbrücke in Richtung der Längserstreckung der Gliederbrüdie in mehrere Gliederbrückenelemente geteilt ist, wobei zumindest eines dieser Gliederbrückenelemente mehrere endseitig in den gegenüberliegenden Rahmenelementen angelenkte Trittglieder umfasst und unabhängig von den jeweils benachbarten Gliederbrückenelementen um eine quer zur + Längserstreckung der Gliederbrücke verlaufende Schwenkachse in eine Wartungsposition hochschwenkbar ist.

Auf diese Weise wird ein einfaches Befördern des hochschwenkbaren Gliederbrückenelementes in eine Wartungsposition bzw. zurück in eine im Wesentlichen horizontale Betriebsposition ermöglicht, ohne dass hierbei der Faltenbalg bzw. dessen Seitenabdeckelemente zurückgeschoben oder gequetscht werden müssen. Ein unnötiger Verschleiß des Faltenbalgs kann somit vermieden und dessen durchschnittliche Lebensdauer wesentlich erhöht werden.

Darüber hinaus ist es fortan einer einzigen Person möglich, Wartungsarbeiten an einem gattungsgemäßen Fahrzeugübergang, inbesondere an einer unterhalb der Gliederbrücke angeordneten Kupplungsvorrichtung durchzuführen. Es wird keine Hilfe weiterer Personen zur Manipulation der Seitenabdeckelemente des Faltenbalgs mehr benötigt, wenn die Gliederbrücke bzw. deren mindestens eines hochschwenkbares Gliederbrückenelement in seine Wartungsposition gebracht werden soll.

Des weiteren muss nicht mehr die gesamte Gliederbrücke in die Wartungsposition hochschwenkt werden, um Manipulationen an in definierten Abschnitten unterhalb der Gliederbrücke angeordneten An- bzw. Einbauelemente vorzunehmen. Hingegen ist es zu diesem Zweck fortan ausreichend, jeweils oberhalb dieser definierten Abschnitte angeordnete Gliederbrückenelemente in die Wartungsposition hochzuschwenken.

Da bei Einsatz einer erfindungsgemäßen Gliederbrücke keine Elastizität bzw. Zurückdrängbarkeit der Faltenbalg-Seitenabdeckelemente über die Seitenabschnitte der Gliederbrücke mehr gefordert ist, können der Faltenbalg bzw. die Seitenabdeckelemente aus einem stabileren Material bzw. unter Vorsehung einer größeren Materialschichtdicke gefertigt oder mittels Metallprofilen verstärkt werden, was die Lebensdauer des Faltensbalgs weiter erhöht.

Die nicht mehr erforderliche Elastizität bzw. Zurückdrängbarkeit der Seitenabdeckelemente ermöglicht des Weiteren einen steileren Verlauf der Seitenabdeckelemente gegenüber der Vertikalen und somit eine stabilere Bauweise des Faltenbalgs.

Gemäß einer bevorzugten Ausführungsform der Erfindung ist eine parallel zur Schwenkachse gemessene maximale Breitenerstreckung des mindestens einen hochschwenkbaren Gliederbrückenelementes (bzw. einer Gruppe an hochschwenkbaren Gliederbrückenelementen) kleiner oder gleich einem in Draufsicht auf den Übergang betrachteten, ebenfalls parallel zur Schwenkachse gemessenen minimalen lichten Abstand zwischen den Seitenabdeckelementen des Faltenbalgs.

Auf diese Weise werden die Seitenabdeckelemente des Faltenbalgs während eines Beförderns des hochschwenkbaren Gliederbrückenelementes in seine Wartungsposition von den Seitenabschnitten dieses Gliederbrückenelementes nicht berührt und es wird jeglicher Verschleiß der Seitenabdeckelemente des Faltenbalgs vermieden.

Selbstverständlich wäre es auch möglich, dass die maximale Breitenerstreckung des mindestens einen hochschwenkbaren Gliederbrückenelementes geringfügig größer ist als der lichte Abstand zwischen den Seitenabdeckelementen des Faltenbalgs. Hierbei kann das in Betriebsposition befindliche, hochschwenkbare Gliederbrückenelement etwa von einem kurzen elastischen Lippenabschnitt Faltenbalg-Seitenabdeckelement überlappt werden, wobei immer noch der erfindungsgemäße Effekt einer weitgehenden Schonung des Faltenbalgs erhalten bleibt.

Gemäß einer besonders bevorzugten Ausführungsform der Erfindung verläuft die axiale Erstreckung der Trittglieder in Durchgangsrichtung durch den Übergang, wobei das erste Rahmenelement an einem der beiden Fahrzeugteile bzw. an einem diesem zugeordneten Trägerelement und das zweite Rahmenelement am anderen der beiden Fahrzeugteile bzw. an einem diesem zugeordneten Trägerelement angelenkt ist. Auf diese Weise wird eine einfache und stabile Ausführung der Gliederbrücke ermöglicht, ohne dass deren Trittglieder geteilt werden müssen.

Alternativ dazu wäre es auch möglich, dass die Gliederbrücke um 90° verdreht im Übergang angeordnet ist, sodass die Rahmenelemente parallel zur Übergang-Durchgangsrichtung bzw. im Bereich der Seitenabdeckelemente des Faltenbalgs verlaufen, während die Trittglieder orthogonal zur Übergang-Durchgangsrichtung verlaufen.

Gemäß einer weiteren bevorzugten Ausführungsform der Erfindung ist es vorgesehen, dass die Gliederbrücke - im Falle einer Anordnung gemäß dem vorangehend beschriebenen Anspruch 3 samt den Rahmenelementen - in drei Gliederbrückenelemente geteilt ist, wobei das mittlere Gliederbrückenelement dieser Gliederbrücke in die Wartungsposition hochschwenkbar ist, während die benachbarten weiteren Gliederbrückenelemente von den Seitenabdeckelementen des Faltenbalgs überlappt werden.

Zufolge der erfindungsgemäßen Maßnahme einer Längsteilung der Gliederbrücke wird eine besonders flexible Gestaltung des Übergangs ermöglicht. Indem die Rahmenelemente geteilt ausgeführt sind und an einander gegenüberliegenden Rahmenelementen jeweils eine Serie von stabförmigen Trittgliedern angelenkt ist, können je nach Bedarf eines oder mehrere der Gliederbrückenelement der Gliederbrücke in die Wartungsposition hochgeschwenkt werden.

Die neben dem mittleren, hochschwenkbaren Gliederbrückenelement angeordneten weiteren Gliederbrückenelemente der Gliederbrücke können ortsfest am Trägerelement eines oder beider Fahrzeugteile angelenkt sein, da ein eine Verschwenkbarkeit dieser weiteren Gliederbrückenelemente für standardmäßige Wartungsarbeiten an sich nicht erforderlich ist.

Indem jene Gliederbrückenelemente der Gliederbrücke, welche von den Seitenabdeckelementen überlappt werden, bei Montagearbeiten fortan an ihrem zum Faltenbalg benachbarten Platz verbleiben können, ist es möglich, den Faltenbalg mit einem oder mehreren Versteifungsrahmenelementen auszustatten, welche in den Übergangskanal hineinragen und an einem Seitenabschnitt der Gliederbrücke bzw. an den seitlich des hochschwenkbaren Gliederbrückenelementes angeordneten weiteren Gliederbrückenelementen der Gliederbrücke auflagert. Das Versteifungsrahmenelement kann hierbei unmittelbar oder mittelbar, vorzugsweise unter Zwischenlage eines Gleitelementes an dem/den Seitenabschnitt(en) der erfindungsgemäßen Gliederbrücke auflagern.

Durch ein derartiges Auflagern von Versteifungsrahmenelementen bzw. von mit diesen verbundenen Umfangsrahmen des Faltensbalgs an der Oberseite der Gliederbrücke wird eine einfache und statisch vorteilhafte Lastabtragung des vom Faltenbalg verursachten Gewichts auf die beiden Fahrzeigteile bzw. auf deren Trägerelemente ermöglicht. Bei konventionellen Gliederbrücken wie in der eingangs erwähnten EP 0 332 121 B1 ist eine solche Vorsehung von Versteifungsrahmenelementen bzw. ein Auflagern des Faltenbalgs an der Oberseite der Gliederbrücke aufgrund der geforderten Elastizität bzw. Zurückdrängbarkeit der Seitenabdeckelemente des Faltenbalgs nicht möglich und die Umfangsrahmenkonstruktion muss in statisch nachteiliger Weise um die Seitenabschnitte der Gliederbrücke herumgeführt und unterhalb der Gliederbrücke an einem mit den Fahrzeigteilen in Verbindung stehenden Trägerelement zum Auflagern gebracht werden.

Selbstverständlich ist es auch möglich, die neben dem mittleren, hochschwenkbaren Gliederbrückenelemente angeordneten weiteren Gliederbrückenelemente der Gliederbrücke ebenfalls hochschwenkbar auszuführen. Auf diese Weise könnte die Gliederbrücke im Notwendigkeitsfalle entlang ihrer gesamten Breitenerstreckung hochgeschwenkt bzw. in die Wartungsposition befördert werden.

Gemäß einer bevorzugten Ausführungsform der Erfindung ist das mindestens eine hochschwenkbare Gliederbrückenelement der Gliederbrücke mittels Scharniervorrichtungen an einem Trägerelement eines der beiden Fahrzeugteile verschwenkbar angelenkt.

Eine kompakte Ausführung der erfindungsgemäßen Gliederbrücke wird ermöglicht, indem die Scharniervorrichtungen an einem oder an beiden der jeweils gegenüberliegenden, die Trittglieder endseitig haltenden Rahmenelemente angeordnet sind.

Gemäß einer besonders bevorzugten Ausführungsform sind die Scharniervorrichtungen öffenbar ausgestaltet. Auf diese Weise kann das mindestens eine hochschwenkbare Gliederbrückenelement bei Bedarf aus seiner Betriebsposition freigegeben werden. Sofern an beiden gegenüberliegenden Rahmenelementen des hochschwenkbare Gliederbrückenelementes Scharniervorrichtungen vorgesehen sind, können die beiden fahrzeugseitigen Endbereiche der Gliederbrücke wahlweise freigegeben oder zur Ausbildung einer Schwenkachse am jeweiligen Trägerelement angelenkt bleiben.

Um eine flexible Anpassung der Position der Gliederbrücke an die Relativbewegungen der beiden Fahrzeugteile zu ermöglichen, ist es gemäß einer weiteren bevorzugten Ausführungsform der Erfindung vorgesehen, dass die Gliederbrücke in Durchgangsrichtung des Übergangs entgegen der Federkraft einer Federungsvorrichtung um einen Verstellweg x beweglich ist.

Vorzugsweise ist an beiden jeweils den Fahrzeuggliedern zugewandten Endbereichen der Gliederbrücke eine Federungsvorrichtung vorgesehen.

Der zulässige Verstellweg x leitet sich vom Kupplungsspiel zwischen den beiden benachbarten Fahrzeugteilen ab und ist vorzugsweise kleiner oder gleich einem zwischen den Fahrzeugteilen vorhandenen Kupplungsspiel.

Eine geeignete axiale Abfederung der erfindungsgemäßen Gliederbrücke wird dadurch erreicht, indem die Federungsvorrichtung gemäß einer besonders bevorzugten Ausführungsvariante mindestens eine in Richtung des jeweils benachbarten Fahrzeugglieds gekrümmte Blattfeder umfasst. Ein Mittelabschnitt dieser Blattfeder ist am Trägerelement des Fahrzeugglieds anlenkbar, während die Endbereiche der Blattfeder an den Scharniervorrichtungen oder an einem mit den Scharniervorrichtungen verbundenen Schlitten angelenkt sind. Der Schlitten ist hierbei vorzugsweise leistenförmig ausgeführt und verläuft parallel zum jeweils benachbarten Rahmenelement.

In einer speziellen Ausführungsvariante der Erfindung umfasst die Gliederbrücke mehrere hochschwenkbare Gliederbrückenelemente. Indem mehrere hochschwenkbare Gliederbrückenelemente vorgesehen sind, wird der Kräfteeinsatz beim Befördern der Gliederbrücke in deren Wartungsposition vermindert.

Anspruch 11 bezieht sich auf eine in einem vorangehend beschriebenen Übergang eingesetzte Gliederbrücke zur Verbindung zweier gelenkig miteinander verbundener Fahrzeugteile eines Schienenfahrzeugs. Die erfindungsgemäße Gliederbrücke ist in Richtung der Längserstreckung der Gliederbrücke in mehrere Gliederbrückenelemente geteilt, wobei zumindest eines dieser Gliederbrückenelemente mehrere endseitig in den gegenüberliegenden Rahmenelementen angelenkte Trittglieder umfasst und unabhängig von den jeweils benachbarten Gliederbrückenelementen um eine quer zur Längserstreckung der Gliederbrücke verlaufende Schwenkachse in eine Wartungsposition hochschwenkbar ist.

Die Ansprüche 12-15 beschreiben analog zum erfindungsgemäßen Übergang beschriebene Erfindungsmerkmale der Gliederbrücke, welche samt der hierbei erzielbaren Vorteile bereits vorangehend beschrieben wurden.

Die Erfindung wird nun anhand von Ausführungsbeispielen näher erläutert. Dabei zeigt:
- Fig.1: eine schematische Darstellung eines zwischen zwei miteinander gekuppelten Schienenfahrzeugteilen angeordneten, eine Gliederbrücke umfassenden Übergangs
- Fig.2: einen erfindungsgemäßen Übergang in Schrägansicht
- Fig.3: einen an die Stirnseite eines Fahrzeugteils anschließenden erfindungsgemäßen Übergang in Vorderansicht
- Fig.4: den erfindungsgemäßen Übergang aus Fig.3 in Einzelansicht
- Fig.5: ein Seitenabdeckelemente eines Faltenbalgs betreffendes Detail "X" aus Fig.4
- Fig.6: eine Draufsicht auf einen eine mehrteilige Gliederbrücke umfassenden Übergang unter Ausblendung des Dachbereichs des Faltenbalgs, wobei sich die Gliederbrücke in einer horizontalen Betriebsposition befindet
- Fig.7: eine Draufsicht auf die mehrteilige Gliederbrücke gemäß Fig.6, wobei die fahrzeuggliedseitigen Endbereiche der Gliederbrücke mit Abdeckblechen bestückt sind
- Fig.8: eine Detailansicht eines der Endbereiche der erfindungsgemäßen Gliederbrücke gemäß Fig.6, unter Ausblendung der Abdeckbleche, wobei sich die Gliederbrücke in einer horizontalen Betriebsposition befindet
- Fig.9: eine axonometrische Detailansicht eines der Endbereiche der erfindungsgemäßen Gliederbrücke gemäß Fig.8, wobei ein mittleres Gliederbrückenelement der Gliederbrücke aktuell in eine Wartungsposition hochgeschwenkt wird
- Fig.10: eine alternative Teilungsvariante der erfindungsgemäßen Gliederbrücke in Detailansicht

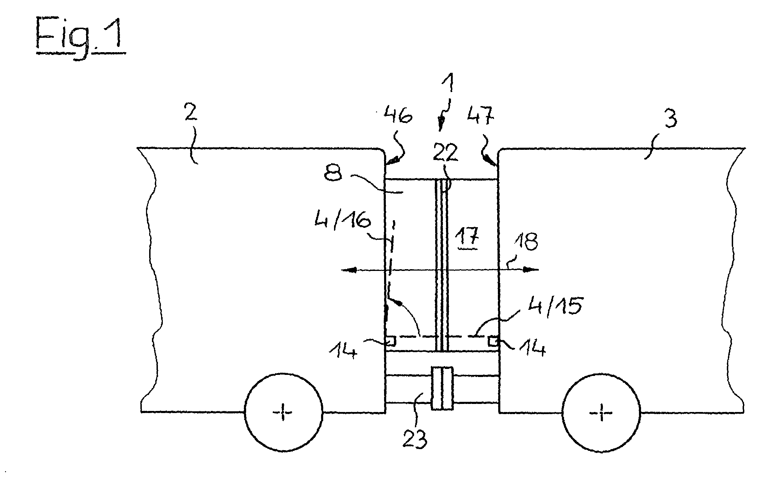

Fig.1 zeigt zwei abschnittsweise dargestellte Fahrzeugteile 2 und 3, welche mittels einer Kupplungsvorrichtung 23 miteinander verbunden sind. Zwischen den Stirnseiten 46, 47 der Fahrzeugteile 2, 3 ist ein Abstand ausgebildet, welcher mittels eines erfindungsgemäßen Übergangs 1 überbrückt wird.

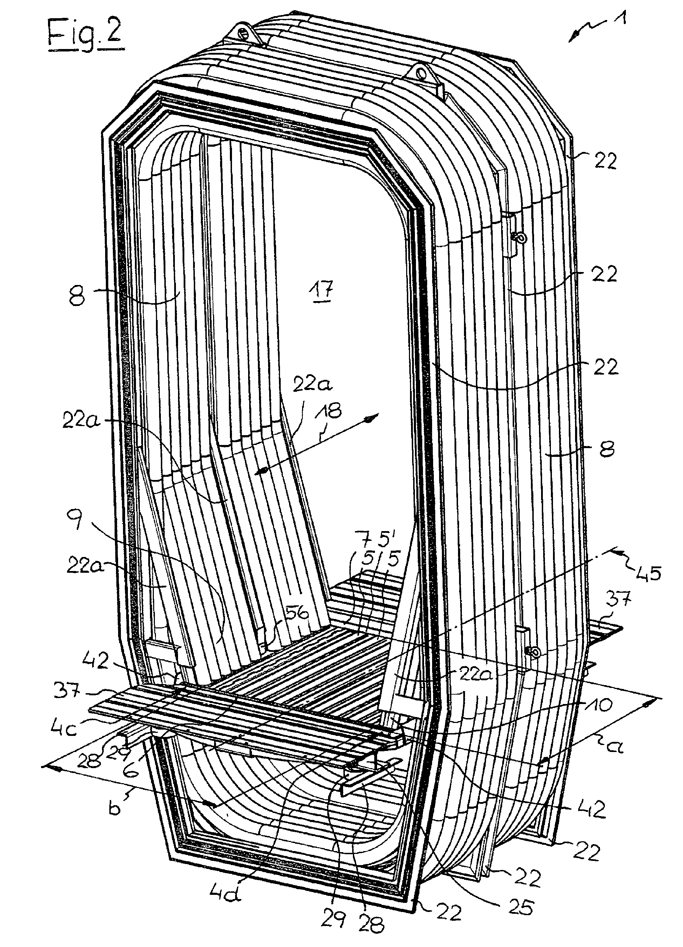

Der in Fig.2 in Schrägansicht dargestellte Übergang 1 umfasst eine Gliederbrücke 4, welche in einem ersten Endbereich 4a am ersten Fahrzeugteil 2 bzw. an einem diesem zugeordneten Trägerelement 14 und in einem dem ersten Endbereich 4a gegenüberliegenden zweiten Endbereich 4b am zweiten Fahrzeugteil 3 bzw. an einem diesem zugeordneten Trägerelement 14 angelenkt ist. Bei den Trägerelementen 14 kann es sich z.B. um einen im Bereich der Fahrzeugteil-Stirnseiten 46, 47 angebrachten Stahl-Profilträger oder um eine Bodenplatte handeln.

Die dargestellte Anordnung ist von einem Faltenbalg 8 umgeben, welcher zwischen den Fahrzeugteilen 2 und 3 einen Übergangskanal 17 ausbildet und die Fahrgäste vor Außen- bzw. Witterungseinflüssen schützt. Anstelle eines Faltenbalgs 8 kann selbstverständlich auch ein Wellenbalg zum Einsatz kommen. Der üblicherweise aus einem Kunststoff- bzw. Gummiwerkstoff gefertigte Faltenbalg 8 kann ein- oder mehrteilig aufgebaut sein und weist mehrere - im vorliegenden Ausführungsbeispiel drei - aus Stahl gefertigte Umfangsrahmen 22 auf.

Die Gliederbrücke 4 weist eine in Durchgangsrichtung 18 durch den Übergang 1 gemessene Längserstreckung a und eine dazu orthogonal verlaufende Breitenerstreckung b auf (siehe Fig.2). Die Figuren 2-4 zeigen eine Betriebsposition 15 der Gliederbrücke 4, in welcher diese eine im Wesentlichen horizontale Trittfläche ausbildet. Ein Fahrgast kann den Übergang 1 bzw. die Gliederbrücke 4 in einer parallel zur Gliederbrücken-Mittelachse 45 verlaufenden Durchgangsrichtung 18 durchqueren.

Der Faltenbalg 8 weist einander gegenüberliegende Seitenabdeckelemente 9, 10 auf, mittels welcher die in Betriebsposition 15 befindliche Gliederbrücke 4 im Bereich zweier zum Faltenbalg 8 benachbarter Gliederbrücken-Seitenabschnitte 4c, 4d abschnittsweise überlappt wird. Die Seitenabdeckelemente 9, 10 des Faltenbalgs 8 verlaufen hierbei jeweils über die gesamte Längserstreckung a der Gliederbrücke 4.

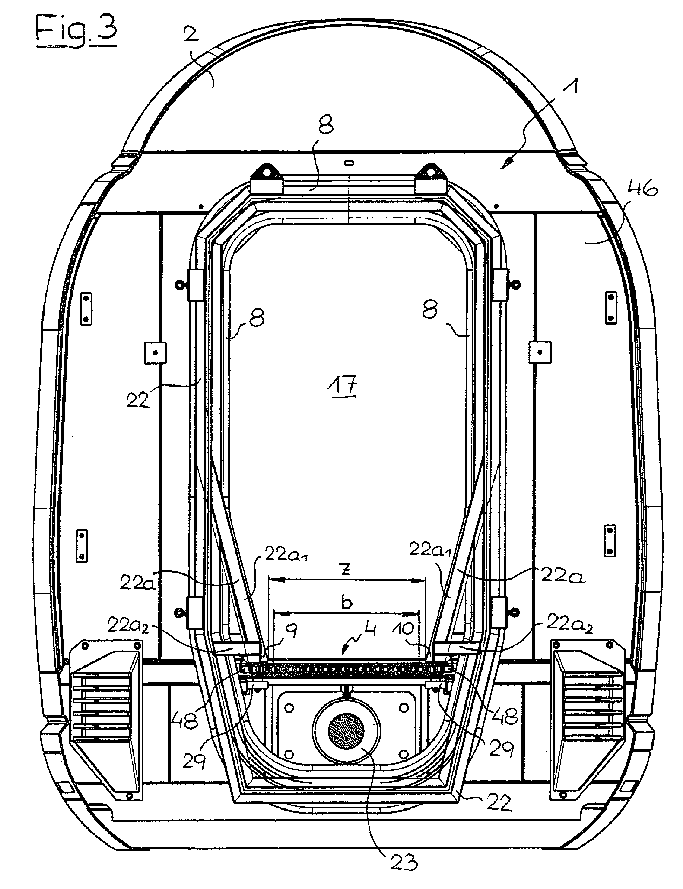

Gemäß dem vorliegenden Ausführungsbeispiel verlaufen die Seitenabdeckelemente 9, 10 des Faltenbalgs 8 schräg zu einer durch die Gliederbrücke 4 gebildeten Ebene, sodass sich, wie in Fig.3 ersichtlich, in einer der Durchgangsrichtung 18 entsprechenden Blickrichtung ein im Wesentlichen trichterförmiger Querschnitt des Übergangskanals 17 ergibt.

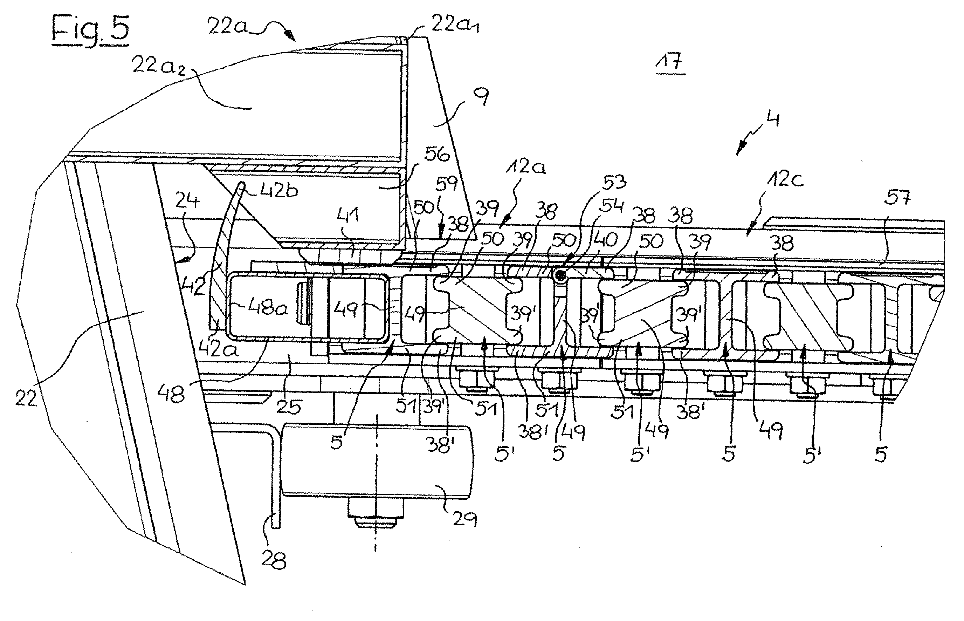

Der Aufbau einer gattungsgemäßen Gliederbrücke 4 ist in einer vertikalen Detail-Schnittansicht gemäß Fig.5 ersichtlich: Die Gliederbrücke 4 setzt sich aus einer Serie an stabförmigen Trittgliedern 5, 5' zusammen, deren Querschnitt vorzugsweise jeweils ein I-Profil aufweist. Jedes Trittglied 5, 5' weist also einen im Wesentlichen vertikalen Mittelsteg 49 auf, wobei an den oberen Endbereich des Mittelstegs 49 ein im Wesentlichen horizontal verlaufender oberer Flanschabschnitt 50 anschließt, während an den unteren Endbereich des Mittelstegs 49 ein im Wesentlichen horizontal verlaufender unterer Flanschabschnitt 51 anschließt. Selbstverständlich können die Trittglieder 5, 5' auch jeweils mehrere Mittelstege 49 bzw. ein Hohlkammerprofil oder ein sonstiges von der I-Profilform abweichendes Querschnittsprofil aufweisen.

Die Trittglieder 5, 5' sind parallel zueinander angeordnet, wobei sich benachbarte Trittglieder 5, 5' im Bereich von Kontaktabschnitten 38, 38', 39, 39' kontaktierend überlappen. Gemäß vorliegendem Ausführungsbeispiel ist jedes zweite Trittglied als Zwischenglied 5' ausgeführt, dessen obere und untere Flanschabschnitte 50, 51 zwischen den freien Endbereichen der Flanschabschnitte 50, 51 jeweils benachbarter Trittglieder 5 gehalten sind. Der Querschnitt der als Zwischenglieder 5' ausgeführten Trittglieder weist also eine kleinere axiale Erstreckung auf als der Querschnitt der links und rechts dazu benachbarten Trittglieder 5.

Die Kontaktabschnitte 38, 38', 39, 39', entlang welcher sich die benachbarten Trittglieder 5, 5' kontaktierend überlappen, entsprechen gemäß dem vorliegenden Ausführungsbeispiel den einander zugewandten Flächen der Endbereiche der oberen und unteren Flanschabschnitte 50, 51 der Trittglieder 5, 5'. Die Mittelstege 49 der als Zwischenglieder 5' ausgeführten Trittglieder sind aus Stabilitätsgründen breiter ausgeführt als die Mittelstege 49 der jeweils benachbarten Trittglieder 5. Die Trittglieder 5, 5' sind vorzugsweise aus einem Stahl- oder Aluminiumwerkstoff gefertigt, wobei die als Zwischenglieder 5' ausgeführten Trittglieder auch aus Kunststoff ausgeführt sein können.

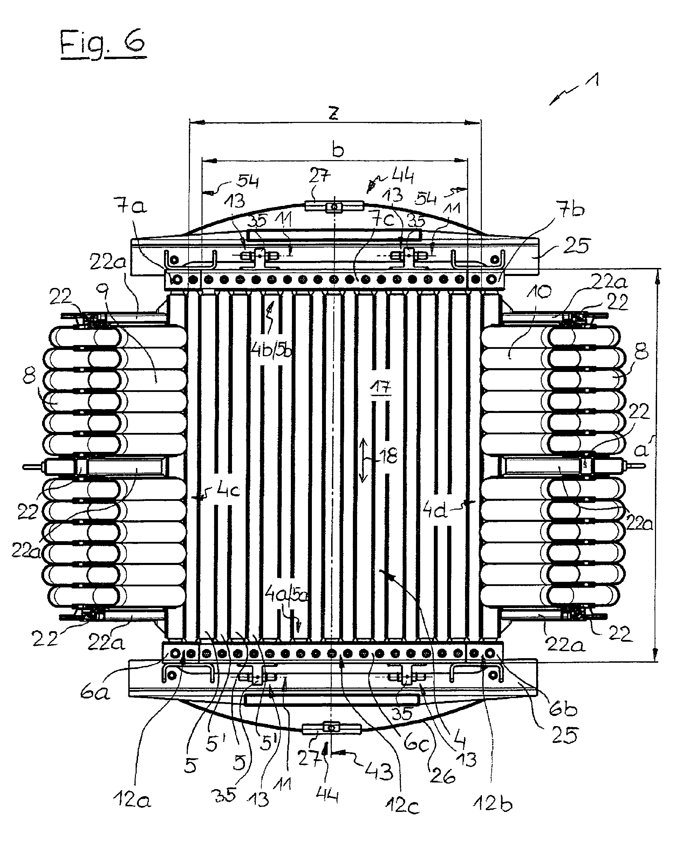

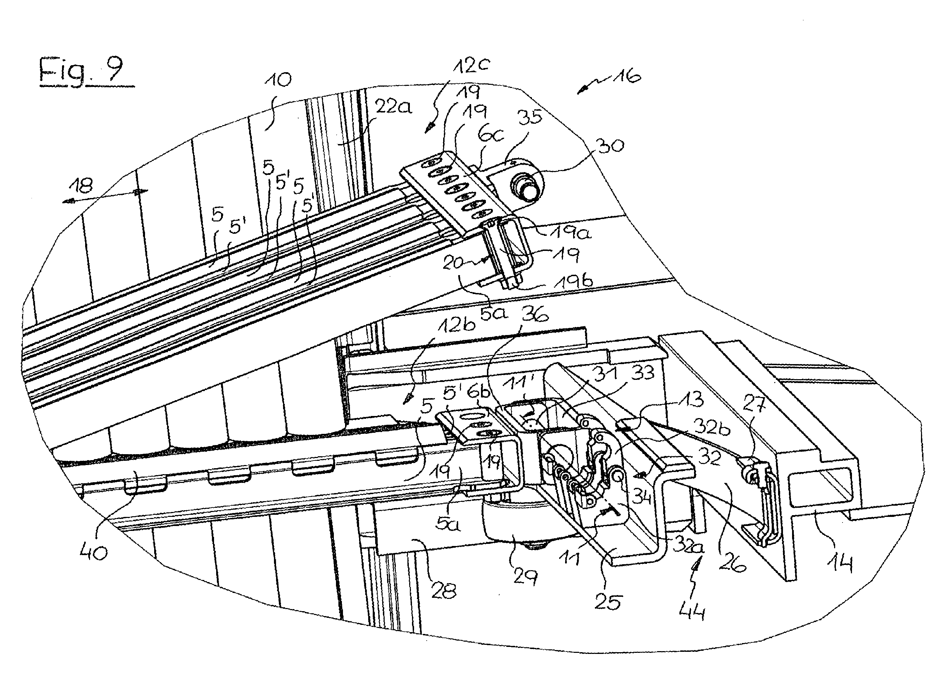

Zur Anlenkung der Trittglieder 5, 5' sind zwei in Fig.6 ersichtliche, einander gegenüberliegende Rahmenelemente 6, 7 vorgesehen, an welchen die Trittglieder 5, 5' endseitig angelenkt sind. Zu diesem Zweck sind die Rahmenelemente 6, 7 entlang ihrer Längserstreckung mit z.B. als Bohrungen ausgeführten Aufnahmen 20 versehen, in welchen Bolzenelemente 19 gehalten sind. Die Bolzenelemente 19 durchsetzen in Fig.9 ersichtliche, an den Endbereichen 5a, 5b der Trittglieder 5, 5' angeordnete Durchgangsöffnungen 52.

Die an den Rahmenelementen 6, 7 angelenkten Trittglieder 5, 5' sind jeweils um eine durch die Bolzenelemente 19 ausgebildete vertikale Achse verschwenkbar. Die Trittglieder 5, 5' können sich also in einer im Wesentlichen horizontalen Ebene zu einem gewissen Grade bewegen, wobei die Bewegungsfreiheit eines einzelnen Trittglieds 5, 5' immer auch von der Geometrie und Anordnung jeweils benachbarter Trittglieder 5, 5' mitbestimmt wird.

Je nach Relativstellung der Fahrzeugteile 2, 3 zueinander, kann sich die in einer Draufsicht gemäß Fig.6 als Rechteck ersichtliche Gliederbrücke 4 also auch zu einem Parallelogramm verschieben. Der mögliche Schwenkwinkel der Trittglieder 5, 5' gegenüber der in Fig.6 eingezeichneten, orthogonal zu den Stirnseiten 46, 47 der Fahrzeugglieder verlaufenden Durchgangsrichtung 18 kann bis zu 50° betragen.

Die Rahmenelemente 6, 7 weisen ein in Fig.9 ersichtliches U-förmiges Querschnittsprofil auf, welches die Endbereiche 5a, 5b der Trittglieder 5, 5' umgreift.

Gemäß dem vorliegenden Ausführungsbeispiel verläuft das erste Rahmenelement 6 im Wesentlichen parallel zur Stirnseite 46 des ersten Fahrzeugteils 2, während das zweite Rahmenelement 7 im Wesentlichen parallel zur Stirnseite 47 des zweiten Fahrzeugteils 2 verläuft. Die axiale Erstreckung der Trittglieder 5, 5' verläuft somit in Durchgangsrichtung 18 durch den Übergang 1. Das erste Rahmenelement 6 ist an einem dem ersten Fahrzeugteil 2 zugeordneten Trägerelement 14 angelenkt und das zweite Rahmenelement 7 ist an einem dem zweiten Fahrzeugteil 3 zugeordneten weiteren Trägerelement 14 angelenkt. Die Rahmenelemente 6, 7 verlaufen also im Wesentlichen parallel zu einer Schwenkachse 11 bzw. orthogonal zur Längserstreckung a der Gliederbrücke 4.

Alternativ dazu wäre auch eine gegenüber der Darstellung in Fig.6 um 90° verdrehte Anordnung der Gliederbrücke 4 möglich, sodass also die Rahmenelemente 6, 7 im Wesentlichen parallel zur Übergang-Durchgangsrichtung 18 bzw. im Bereich der Seitenabdeckelemente 9, 10 des Faltenbalgs 8 verlaufen, während die Trittglieder 5, 5' quer zur Übergang-Durchgangsrichtung 18 verlaufen. Eine derartige Anordnung der Gliederbrücke ist in der EP 0 332 121 B1 beschrieben. Die Gliederbrücke 4 ist in solchem Falle nicht mittels der Rahmenelemente 6, 7 an den Fahrzeugteilen 2, 3 angelenkt, sondern mittels der beiden äußersten Trittglieder 5, 5'. Die konstruktive Auslegung einer hierbei erforderlichen Traverse zur Anlenkung der Trittglieder 5, 5' ist ebenfalls der genannten Druckschrift zu entnehmen.

Erfindungsgemäß ist es vorgesehen, dass die Gliederbrücke 4, in Durchgangsrichtung 18 durch den Übergang 1 betrachtet, in mehrere Gliederbrückenelemente 12a, 12b, 12c geteilt ist, wobei zumindest eines dieser Gliederbrückenelemente 12a, 12b, 12c unabhängig von den jeweils benachbarten Gliederbrückenelementen 12a, 12b, 12c um eine quer zur Durchgangsrichtung 18 durch den Übergang 1 bzw. quer zur Längserstreckung a der Gliederbrücke 4 verlaufende Schwenkachse 11 aus der im Wesentlichen horizontalen Betriebsposition 15 in eine Wartungsposition 16 hochschwenkbar ist (siehe Fig.1 und Fig.9).

Hierbei ist eine parallel zur Schwenkachse 11 gemessene maximale Breitenerstreckung b des hochschwenkbaren Gliederbrückenelementes 12c kleiner oder gleich einem in Draufsicht auf den Übergang 1 betrachteten, ebenfalls parallel zur Schwenkachse 11 gemessenen minimalen lichten Abstand z zwischen den Seitenabdeckelementen 9, 10 des Faltenbalgs 8 (siehe Figuren 3, 7 und 8).

Alternativ dazu wäre es auch möglich, dass die maximale Breitenerstreckung b des/der hochschwenkbaren Gliederbrückenelemente(s) 12c geringfügig größer ist als der lichte Abstand z zwischen den Seitenabdeckelementen 9, 10 des Faltenbalgs 8. Z.B. könnte das in Betriebsposition 15 befindliche, hochschwenkbare Gliederbrückenelement 12c entlang seiner Längserstreckung a von elastischen Abschnitten der Faltenbalg-Seitenabdeckelemente 9, 10 jeweils um 1-2 cm überlappt werden.

In der Wartungsposition 16 kann die Gliederbrücke 4 z.B. um einen Winkel von bis zu 90° aus der in Fig.2 gezeigten horizontalen Betriebsposition 15 in eine im Wesentlichen vertikale Position verschwenkt sein.

Gemäß vorliegendem Ausführungsbeispiel ist die Gliederbrücke 4 dreiteilig ausgeführt, wobei die Rahmenelemente 6, 7 in Durchgangsrichtung 18 durch den Übergang 1 geteilt ausgeführt sind, sodass also an den Endbereichen 4a, 4b der Gliederbrücke 4 bzw. an den Endbereichen 5a, 5b der Trittglieder 5, 5' jeweils drei in axialer Verlängerung nebeneinander angeordnete Rahmenelemente 6a, 6b, 6c bzw. 7a, 7b, 7c vorgesehen sind.

Auf diese Weise ergeben sich drei Gliederbrückenelemente 12a, 12b, 12c, wobei zwischen den Rahmenelemente-Paaren 6a und 7a bzw. 6b und 7b bzw. 6c und 7c jedes Gliederbrückenelementes 12a, 12b, 12c jeweils eine Serie an Trittgliedern 5, 5' angeordnet ist. Das erste, im Bereich des ersten Seitenabdeckelementes 9 angeordnete bzw. den ersten Seitenabschnitt 4c der Gliederbrücke 4 konstituierende Gliederbrückenelement 12a weist z.B. drei Trittglieder 5, 5' auf. Ebenso weist das zweite, im Bereich des zweiten Seitenabdeckelementes 9 angeordnete bzw. den zweiten Seitenabschnitt 4d der Gliederbrücke 4 konstituierende Gliederbrückenelement 12a z.B. drei Trittglieder 5, 5' auf. Das mittlere Gliederbrückenelement 12c der Gliederbrücke 4 umfasst z.B. fünfzehn Trittglieder 5, 5'.

In einer speziellen Ausführungsform der Erfindung können auch die links und rechts des mittleren Gliederbrückenelementes 12c angeordneten Gliederbrückenelemente 12a und 12b um eine quer zur Durchgangsrichtung 18 durch den Übergang 1 verlaufende Schwenkachse 11 in eine Wartungsposition 16 hochschwenkbar ausgebildet sein.

Allgemein gesprochen kann die Gliederbrücke 4 eine beliebige Anzahl an Gliederbrückenelementen 12a, 12b, 12c aufweisen, von denen eine beliebige Anzahl in eine Wartungsposition 16 hochschwenkbar sein kann.

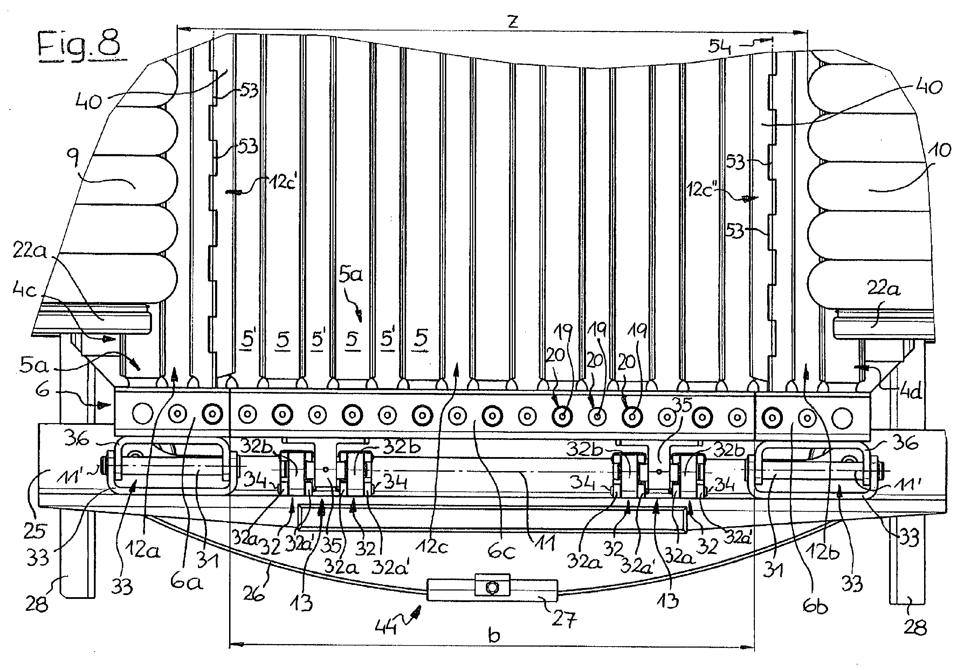

Um einen einfachen Zusammenbau der Gliederbrücke 4 bzw. ein einfaches Hochschwenken des mittleren Gliederbrückenelementes 12c in seine Wartungsposition 16 zu ermöglichen, ist eines der jeweils seitlichsten Trittglieder 5, 5' der zueinander benachbarten Gliederbrückenelemente 12a, 12b, 12c mit einem oder mehreren Scharniergelenken 53 ausgestattet (siehe Fig.5 und Fig.8). Mittels der Scharniergelenke 53 wird eine in Betriebsposition 15 horizontal und in Durchgangsrichtung 18 verlaufende Scharnierachse 54 ausgebildet, um welche ein Halteabschnitt 40 des Trittglieds 5 hochklappbar ist.

Beim hochklappbaren Halteabschnitt 40 handelt es sich gemäß vorliegendem Ausführungsbeispiel um jenen Teil des oberen Flanschabschnittes 50 des Trittglieds 5, welcher auch den zur Kontaktierung des benachbarten, als Zwischenglied ausgeführten Trittglieds 5' vorgesehenen Kontaktabschnitt 38 aufweist. Die Scharniergelenke 53 bzw. die Scharnierachse 54 verlaufen entlang des oberen Endbereichs des Mittelsteges 49 des Trittglieds 5.

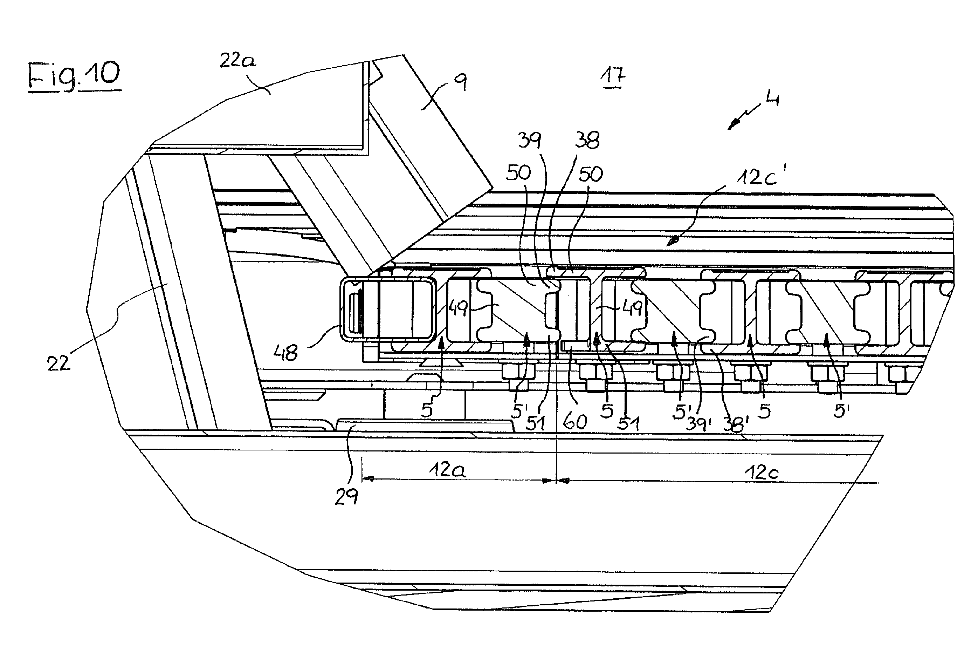

Alternativ dazu ist in Fig.10 eine Ausführungsvariante der erfindungsgemäßen Gliederbrücke 4 dargestellt, bei welcher auf eine Vorsehung von Scharniergelenken 53 bzw. auf einen hochklappbaren Halteabschnitt 40 verzichtet wurde.

Hierbei lagert der obere Flanschabschnitt 50 des im seitlichen Endbereich 12c'des mittleren Gliederbrückenelementes 12c angeordneten Trittglieds 5 im Bereich seines Kontaktabschnitts 38 am Kontaktabschnitt 39 des oberen Flanschabschnitts 50 des als Zwischenglied ausgeführten Trittglieds 5' des vom Seitenabdeckelement 9 überdeckten ersten Gliederbrückenelementes 12a auf, während der untere Flanschabschnitt 51 des Trittglieds 5 einen verkürzten Schenkelabschnitt 60 aufweist, welcher den unteren Flanschabschnitt 51 des als Zwischenglied ausgeführten Trittglieds 5' im Falle eines Hochschwenkens des mittleren Gliederbrückenelementes 12c nicht kontaktiert. Zwischen den einander zugewandten Endbereichen der unteren Flanschabschnitte 51 der im Teilungsbereich der Gliederbrücke 4 angeordneten Trittglieder 5 und 5' der Gliederbrückenelemente 12a und 12c ist also ein horizontaler Abstand vorgesehen. Zwischen dem hochschwenkbaren mittleren Gliederbrückenelement 12c und dem vom Seitenabdeckelement 10 überdeckten zweiten Gliederbrückenelement 12b ist eine zu Fig.10 analoge Ausführung der zueinander benachbarten Trittglieder 5 und 5' vorgesehen bzw. die Anordnung gemäß Fig.10 kann um eine vertikale Mittelachse gespiegelt gedacht werden.

Um ein einfaches Hochschwenken des mittleren Gliederbrückenelementes 12c zu ermöglichen, ist dieses mittels einer oder mehrerer Scharniervorrichtungen 13 am Trägerelement 14 des ersten Fahrzeugteils 2 und/oder am Trägerelement 14 des zweiten Fahrzeugteils 3 angelenkt (siehe Fig.8 und Fig.9).

Gemäß vorliegendem Ausführungsbeispiel sind beide Rahmenelemente 6c, 7c des hochschwenkbaren Gliederbrückenelementes 12c mit jeweils zwei Scharniervorrichtungen 13 versehen. In einer vereinfachten Bauweise ist es selbstverständlich möglich, das hochschwenkbare Gliederbrückenelement 12c lediglich an einem seiner Endbereiche 4a, 4b bzw. an einem seiner Rahmenelemente 6c, 7c mit mindestens einer Scharniervorrichtung 13 auszustatten.

Eine Scharniervorrichtung 13 umfasst ein am Rahmenelement 6c bzw. 7c angebrachtes Kupplungselement 35, welches mindestens einen im Wesentlichen horizontal verlaufenden Arretierbolzen 30 aufweist. Gemäß vorliegendem Ausführungsbeispiel steht das Kupplungselement 35 in eine dem Trägerelement 14 zugewandte Richtung vom Rahmenelement 6c, 7c ab und weist beiderseits in Richtung der Breitenerstreckung b der Gliederbrücke 4 verlaufende Arretierbolzen 30 auf.

Des weiteren ist ein in Fig.9 ersichtlicher Schlitten 25, vorgesehen, welcher gemäß vorliegendem Ausführungsbeispiel ein leistenförmiges Führungselement umfasst, welches im Wesentlichen parallel zum Trägerelement 14 des Fahrzeugteils 2, 3 verläuft. An Schlitten 25 bzw. am leistenförmigen Führungselement ist mindestens ein Arretieraufnahmeelement 32 angeordnet, welches eine zum Arretierbolzen 30 korrespondierende Halteöffnung 55 aufweist. Wie ebenfalls anhand von Fig.9 ersichtlich, umfasst das Arretieraufnahmeelement 32 ein Basiselement 32a, an welchem ein Verschlusselement 32b mittels eines Achsstiftes 34 verschwenkbar angelenkt ist. Der Achsstift 34 verläuft im Wesentlichen horizontal bzw. parallel zur Längsachse des Bolzenelementes 30 des Kupplungselementes 35.

Die Halteöffnung 55 wird von einander zugewandten Innenseiten des Basiselementes 32a und des Verschlusselementes 32b ausgebildet.

Das bewegliche Verschlusselement 32b kann von einer das Bolzenelement 30 des Kupplungselementes 35 in der Halteöffnung 55 fixierenden Arretierstellung in eine in Fig.9 dargestellte, das Bolzenelement 30 für ein Hochschwenken freigebende Freigabestellung befördert werden.

Gemäß dem vorliegenden Ausführungsbeispiel besteht jede Scharniervorrichtung 13 aus zwei Arretieraufnahmeelementen 32, wobei jedes der beiden Bolzenelemente 30 des Kupplungselementes 35 mittels eines an zwei Basiselementen 32a angelenkten Verschlusselement 32b arretierbar ist. Es sei angemerkt, dass in der Draufsicht auf die erfindungsgemäße Gliederbrücke 4 gemäß Fig.6 lediglich die an den Rahmenelementen 6c, 7c angebrachten Kupplungselemente 35 der Scharniervorrichtungen 13 dargestellt sind, nicht jedoch die am Schlitten 25 angebrachten Arretieraufnahmeelemente 32.

Auch die beiden seitlichen Gliederbrückenelemente 4a und 4b sind mit Scharniervorrichtungen 13 versehen, welche gemäß Fig.8 jedoch unterschiedlich zu den am mittleren Gliederbrückenelement 12c angeordneten Scharniervorrichtungen 13 ausgeführt sind.

Hierbei umfasst die Scharniervorrichtung 13 ein am Rahmenelement 6a bzw. 6b und/oder am dazu gegenüberliegenden Rahmenelement 7a bzw. 7b angebrachtes weiteres Kupplungselement 36, welches mit einem am Schlitten 25 angeordneten weiteren Arretieraufnahmeelement 33 kuppelbar ist. Zu diesem Zweck weisen das weitere Kupplungselement 36 und das weitere Arretieraufnahmeelement 33 einander überlappende Flanschabschnitte auf, welche von einem weiteren Arretierbolzen 31 durchsetzt werden. Der weitere Arretierbolzen 31 kann zum Zwecke einer Demontage der Gliederbrücke 4 aus den das Kupplungselement 36 und das Arretieraufnahmeelement 33 durchsetzenden Öffnungen herausgezogen werden.

Während an einer der Gliederbrücke 4 zugewandten Seite des Schlittens 25 die soeben beschriebenen Scharniervorrichtungen 13 angeordnet sind, ist an der von der Gliederbrücke 4 abgewandten Seite des Schlittens 25 eine Federungsvorrichtung 44 angeordnet.

Die Federungsvorrichtung 44 umfasst mindestens eine in Richtung des jeweils benachbarten Fahrzeugteils 2, 3 gekrümmte Blattfeder 26 (siehe Fig.8 und Fig.9). Hierbei ist ein Mittelabschnitt 26c der Blattfeder 26 am Trägerelement 14 des Fahrzeugteils 2, 3 angelenkt, während Endbereiche 26a, 26b der Blattfeder 26 an dem mit den Scharniervorrichtungen 13 Schlitten 25 angelenkt bzw. befestigt sind. Falls kein Schlitten 25 vorgesehen ist, wäre auch ein direktes Anlenken der Blattfeder 26 an den Scharniervorrichtungen 13 denkbar.

Gemäß Fig.9 ist am Mittelabschnitt 26c der Blattfeder 26 ein Adapterelement 27 montiert, welches z.B. mittels Schraubelementen am Trägerelement 14 befestigt ist.

Vorzugsweise ist an beiden jeweils den Fahrzeugteilen 2, 3 zugewandten Endbereichen 4a, 4b der Gliederbrücke 4 eine Federungsvorrichtung 44 vorgesehen (so in Fig.6 dargestellt).

Zufolge der Vorsehung der Federungsvorrichtung(en) 44 ist die Gliederbrücke 4 in Durchgangsrichtung 18 des Übergangs 1 entgegen der Federkraft der Federungsvorrichtung 44 um einen Verstellweg x axial beweglich gehalten.

Der zulässige Verstellweg x leitet sich vom Kupplungsspiel zwischen den Fahrzeugteilen 2, 3 ab und ist vorzugsweise kleiner oder gleich dem Kupplungsspiel zwischen den Fahrzeugteilen 2, 3.

Es versteht sich, dass die Federungsfunktion der Federungsvorrichtung 44 anstelle von einer beschriebenen Blattfeder 26 auch von einem anderen geeigneten Federungselement, z.B. durch axial zwischen dem Schlitten 25 und dem Trägerelement 14 angeordnete Spiralfedern, übernommen werden kann.

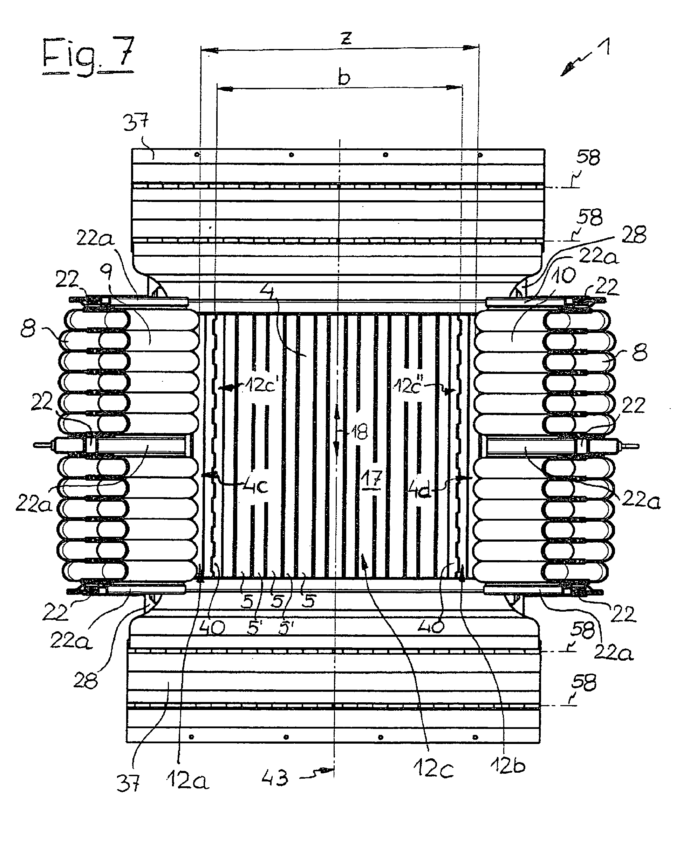

Die fahrzeugseitigen Endbereiche 4a, 4b der erfindungsgemäßen Gliederbrücke 4 sind vorzugsweise mit einem oder mehreren, in einer Draufsicht gemäß Fig.7 ersichtlichen Abdeckblechen 37 bedeckt. Diese Abdeckbleche 37 können durch eine oder mehrere, jeweils quer zur Durchgangsrichtung 18 bzw. zur Gliederbrücken-Mittelachse 43 verlaufende Scharnierachsen 58 in mehrere - im vorliegenden Ausführungsbeispiel drei - Abschnitte unterteilt sein. Die Abdeckbleche 37 dienen dazu, um die zwischen den Rahmenelementen 6, 7 und den Trägerelementen 14 der Fahrzeugteile 2, 3 vorhandenen Spaltbereiche zu überdecken.

Auch die Oberseiten der Trittglieder 5, 5' sind von einem oder mehreren, in Fig.5 ersichtlichen Trittplatten 57 abgedeckt.

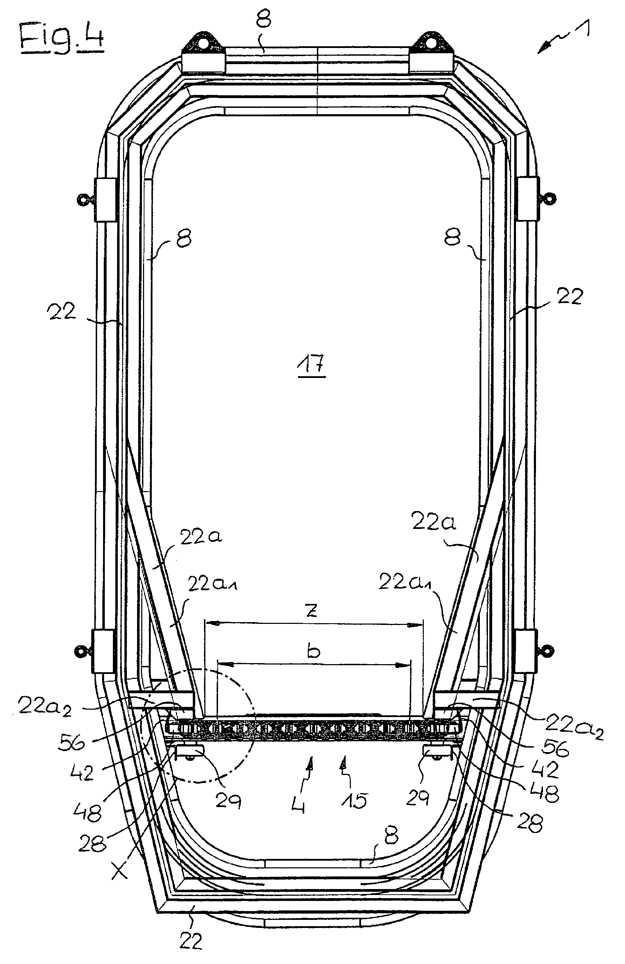

Wie in Fig.2 ersichtlich, sind an den Umfangsrahmen 22 des Faltenbalgs 8 Versteifungsrahmenelemente 22a angeordnet, welche die Seitenabdeckelemente 9, 10 des Faltenbalgs 8 stabilisieren bzw. zu deren Montage dienen. Gemäß dem vorliegenden Ausführungsbeispiel weisen die Versteifungsrahmenelemente 22a jeweils einen im Wesentlichen parallel zu den in Richtung der Gliederbrücken-Mittelachse 43 geneigten Seitenabdeckelementen 9, 10 verlaufenden ersten Abschnitt 22a₁ auf, welcher in einem der Gliederbrücke 4 zugewandten unteren Endbereich an einen im Wesentlichen horizontal und in eine von der Gliederbrücke 4 abgewandte Richtung bis zum Umfangsrahmen 22 verlaufenden zweiten Abschnitt 22a₂ anschließt (siehe Fig.4).

Gemäß Fig.2 weist der Faltenbalg 8 drei parallel zueinander angeordnete Umfangsrahmen 22 auf, wobei beiderseits der Gliederbrücke 4 jeweils drei Versteifungsrahmenelemente 22a an korrespondierenden Umfangsrahmen 22 angeordnet sind.

Zumindest der mittlere der drei Umfangsrahmen 22 als "Mittelrahmen" bezeichnete lagert mittels der Versteifungsrahmenelemente 22a an den Seitenabschnitten 4c, 4d der Gliederbrücke 4 bzw. an den beiderseits des hochschwenkbaren mittleren Gliederbrückenelementes 12c angeordneten, ersten und zweiten Gliederbrückenelementen 12a und 12b der Gliederbrücke 4 auf. Wie in Fig.5, welche ein Detail "X" aus Fig.4 zeigt, näher ersichtlich, ist zwischen dem zweiten Abschnitt 22a₂ des Versteifungsrahmenelementes 22a und dem (nicht hochschwenkbaren) Gliederbrückenelement 12a der Gliederbrücke 4 ein Gleitelement 41 angeordnet. Das Gleitelement 41 ist in einer bevorzugten Ausführungsform an einem an der Unterseite des zweiten Abschnitts 22a₂ des Versteifungsrahmenelementes 22a angebrachten Stützelement 56 befestigt.

In Fig.7 eingezeichnete, seitliche Endbereiche 12c', 12c" des mittleren Gliederbrückenelementes 12c der Gliederbrücke 4 verlaufen vorzugsweise im Wesentlichen parallel zur Mittelachse 43 der Gliederbrücke 4. Selbstverständlich sind jedoch auch schräge Teilungen bzw. Grundrissgeometrien der Gliederbrücke 4 denkbar.

In einer Fortbildung der erfindungsgemäßen Gliederbrücke 4 sind die dem Faltenbalg 8 zugewandten Seitenabschnitte 4c, 4d der Gliederbrücke 4 bzw. die äußersten Trittglieder 5 der vorzugsweise ortsfest angelenkten Gliederbrückenelemente 12a und 12b mit einem in Fig.5 ersichtlichen Dichtungselement 42 versehen. Gemäß der vorliegenden Ausführungsvariante ist zwischen dem oberen Flanschabschnitt 50 und dem unteren Flanschabschnitt 51 des äußersten Trittgliedes 5 des Gliederbrückenelementes 12a ein z.B. in Form eines Vierkant-Hohlprofils ausgeführter Seitenrahmen 48 gehalten. Dieser im Wesentlichen entlang der gesamten Längserstreckung a der Gliederbrücke 4 bzw. des äußersten Trittgliedes 5 verlaufende Seitenrahmen 48 ragt, betrachtet in einer orthogonal zur Gliederbrücken-Mittelachse 43 geführten Vertikalschnittdarstellung gemäß Fig.5, in horizontaler Richtung aus den Flanschabschnitten 50, 51 des Trittglieds 5 heraus, und zwar bis annähernd zu einer Innenseite 24 des Umfangsrahmens 22 des Faltenbalgs 8. An einer der Innenseite 24 des Umfangsrahmens 22 zugewandten Seitenfläche 48a des Seitenrahmens 48 ist schließlich das bereits erwähnte, z.B. aus einem Kunststoff oder einem Gummiwerkstoff mit hohen Schallabsorptionseigenschaften gefertigte Dichtungselement 42 angeordnet.

Das Dichtungselement 42 ist mit einem ersten Endbereich 42a an der Seitenfläche 48a des Seitenrahmens 48 befestigt, z.B. angeklebt und ragt mit einem zweiten Endbereich 42b bis über das unterste Niveau 59 des Seitenabdeckelementes 9, 10 hinauf. Gemäß Fig.5 ragt der zweite Endbereich 42b des Dichtungselementes 42 in annähernd vertikaler Richtung bis annähernd zur Unterseite des horizontal verlaufenden zweiten Abschnitts 22a₂ des Versteifungsrahmenelementes 22a hinauf.

Das Dichtungselement 42 verläuft gleich dem Seitenrahmen 48 im Wesentlichen entlang der gesamten Längserstreckung a der Gliederbrücke 4 bzw. der Trittglieder 5, 5'.

In einem Bereich unterhalb des Übergangs 1 emittierte Schallwellen, welche entlang der Faltenbalg-Innenseite (entspricht im Wesentlichen der in Fig.5 eingezeichneten Innenseite 24 des Umfangsrahmens 22) nach oben in Richtung des Übergangskanals 17 dringen, können von der durch das Dichtungselement 42 gebildeten Barriere wirksam reduziert bzw. davon abgehalten werden, durch einen zwischen dem untersten Niveau 59 des Seitenabdeckelementes 9, 10 und der Oberfläche der Gliederbrücke 4 ausgebildeten Spalt in den Übergangskanal 17 zu dringen. Der für einen im

Übergangskanal 17 befindlichen Fahrgast wahrnehmbare Lärmpegel kann somit deutlich reduziert werden.

In Fig.5 ist des weiteren eine am zum Faltenbalg 8 benachbarten ersten Gliederbrückenelement 12a angeordnete, um eine vertikale Achse gelagerte Führungsrolle 29 ersichtlich, welche eine an den Umfangsrahmen 22 des Faltenbalgs 8 befestigten, parallel zur Durchgangsrichtung 18 verlaufenden Führungsschiene 28 kontaktiert. Spiegelgleich zum in Fig.5 dargestellten linken Seitenabschnitt 4a der Gliederbrücke 4 ist auch am rechten Seitenabschnitt 4b der Gliederbrücke 4 eine derartige Führungsschienen 28 - Führungsrollen 29 - Anordnung vorgesehen (siehe Fig.4). Entlang jedes Seitenabschnitts 4a, 4b der Gliederbrücke 4 sind jeweils mehrere, z.B. zwei oder drei Führungsrollen 29 angeordnet.

Mittels der Führungsschienen 28 - Führungsrollen 29 - Anordnungen wird ein zu starkes horizontales Auslenken der Gliederbrücke 4 bzw. ein Kontaktieren des Faltenbalgs 8 durch die Gliederbrücke 4 verhindert.

### Bezugszeichenliste

- 1: Übergang
- 2: erstes Fahrzeugteil
- 3: zweites Fahrzeugteil
- 4: Gliederbrücke
- 4a: erster Endbereich der Gliederbrücke 4
- 4b: zweiter Endbereich der Gliederbrücke 4
- 4c: erster Seitenabschnitt der Gliederbrücke 4
- 4d: zweiter Seitenabschnitt der Gliederbrücke 4
- 5: Trittglieder
- 5': Trittglieder (Zwischenglieder)
- 5a: erster Endbereich der Trittglieder 5/5'
- 5b: zweiter Endbereich der Trittglieder 5/5'
- 6: erstes Rahmenelement
- 7: zweites Rahmenelement
- 8: Faltenbalg
- 9: Seitenabdeckelement
- 10: Seitenabdeckelement
- 11: Schwenkachse
- 12a: erstes Gliederbrückenelement der Gliederbrücke 4
- 12b: zweites Gliederbrückenelement der Gliederbrücke 4
- 12c: drittes (hochschwenkbares) Gliederbrückenelement der Gliederbrücke 4
- 12c': erster seitlicher Endbereich des hochschwenkbaren Gliederbrückenelementes 12c der Gliederbrücke 4
- 12c": zweiter seitlicher Endbereich des hochschwenkbaren Gliederbrückenelementes 12c der Gliederbrücke 4
- 13: Scharniervorrichtung
- 14: Trägerelemente
- 15: Betriebsposition der Gliederbrücke 4
- 16: Wartungsposition der Gliederbrücke 4
- 17: Übergangskanal
- 18: Durchgangsrichtung
- 19: Bolzenelemente
- 20: Aufnahmen
- 21: Mittelachse der Gliederbrücke
- 22: Umfangsrahmen des Faltenbalges 8
- 22a: Versteifungsrahmenelemente
- 23: Kupplungsvorrichtung
- 24: Innenseite des Umfangsrahmens 22
- 25: Schlitten
- 26: Federungselement (Blattfeder)
- 26a: erster Endbereich des Federungselementes 26
- 26b: zweiter Endbereich des Federungselementes 26
- 26c: Mittelabschnitt des Federungselementes 26
- 27: Adapterelement
- 28: Führungsschiene
- 29: Führungsrolle
- 30: Arretierbolzen
- 31: weitere Arretierbolzen
- 32: Arretieraufnahmeelement
- 32a: Basiselement des Arretieraufnahmeelements 32
- 32b: Verschlusselement des Arretieraufnahmeelements 32
- 33: weiteres Arretieraufnahmeelement
- 34: Achsstifte
- 35: Kupplungselement
- 36: weitere Kupplungselemente
- 37: Abdeckbleche
- 38, 38', 39, 39': Kontaktabschnitte der Trittglieder 5, 5'
- 40: Halteabschnitt
- 41: Gleitelement
- 42: Dichtungselement
- 43: Mittelachse der Gliederbrücke 4
- 44: Federungsvorrichtung
- 45: Verstellrichtung der Gliederbrücke 4
- 46: Stirnseite des ersten Fahrzeugteils 2
- 47: Stirnseite des zweiten Fahrzeugteils 3
- 48: Seitenrahmen
- 48a: Seitenfläche des Seitenrahmens 48
- 49: Mittelsteg der Trittglieder 5, 5'
- 50: oberer Flanschabschnitt der Trittglieder 5, 5'
- 51: unterer Flanschabschnitt der Trittglieder 5, 5'
- 52: Durchgangsöffnungen in den Trittgliedern 5, 5'
- 53: Scharniergelenk
- 54: Scharnierachse
- 55: Halteöffnungen des Arretieraufnahmeelements 32
- 56: Stützelement
- 57: Trittplatten
- 58: Scharnierachsen des Abdeckblechs 37
- 59: unteres Niveau der Seitenabdeckelemente 9, 10
- 60: verkürzter Schenkelabschnitt des unteren Flanschabschnitts 51 des Trittglieds 5 des hochschwenkbaren Gliederbrückenelementes 12c
- a: Längserstreckung der Gliederbrücke
- b: Breitenerstreckung der Gliederbrücke
- x: Verstellweg
- z: minimaler lichter Abstand zwischen den Seitenabdeckelementen 9, 10 des Faltenbalgs 8

## Patentansprüche

1. Übergang (1) zwischen zwei gelenkig miteinander verbundenen Fahrzeugteilen (2, 3) eines Schienenfahrzeugs, wobei zwischen den Fahrzeugteilen (2, 3) eine Gliederbrücke (4) angeordnet ist, welche mehrere stabförmige Trittglieder (5, 5') aufweist, deren Endbereiche (5a, 5b) jeweils gelenkig an einem Rahmenelement (6, 7) angelenkt sind, wobei die Gliederbrücke (4) in einem ersten Endbereich (4a) an einem der beiden Fahrzeugteile (2, 3) bzw. an einem diesem zugeordneten Trägerelement (14) und in einem zweiten Endbereich (4b) am anderen der beiden Fahrzeugteile (2, 3) bzw. an einem diesem zugeordneten Trägerelement (14) angelenkt ist, wobei die Gliederbrücke (4) von einem einen Übergangskanal (17) zwischen den Fahrzeugteilen (2, 3) ausbildenden Faltenbalg (8) umgeben ist und wobei am Faltenbalg (8) einander gegenüberliegende Seitenabdeckelemente (9, 10) angeordnet sind, welche die in Betriebsposition (15) befindliche Gliederbrücke (4) im Bereich zweier zum Faltenbalg (8) benachbarter Gliederbrücken-Seitenabschnitte (4c, 4d) zumindest abschnittsweise überlappen, **dadurch gekennzeichnet, dass** die Gliederbrücke (4) in Durchgangsrichtung (18) durch den Übergang (1) in mehrere Gliederbrückenelemente (12a, 12b, 12c) geteilt ist, wobei zumindest eines dieser Gliederbrückenelemente (12a, 12b, 12c) mehrere endseitig in den gegenüberliegenden Rahmenelementen (6, 7) angelenkte Trittglieder (5, 5') umfasst und unabhängig von den jeweils benachbarten Gliederbrückenelementen (12a, 12b, 12c) um eine quer zur Durchgangsrichtung (18) durch den Übergang (1) verlaufende Schwenkachse (11) in eine Wartungsposition (16) hochschwenkbar ist.

2. Übergang (1) nach Anspruch 1, **dadurch gekennzeichnet, dass** eine parallel zur Schwenkachse (11) gemessene maximale Breitenerstreckung (b) des mindestens einen hochschwenkbaren Gliederbrückenelementes (12c) kleiner oder gleich einem in Draufsicht auf den Übergang (1) betrachteten, ebenfalls parallel zur Schwenkachse (11) gemessenen minimalen lichten Abstand (z) zwischen den Seitenabdeckelementen (9, 10) des Faltenbalgs (8) ist.

3. Übergang (1) nach Anspruch 1 oder 2, **dadurch gekennzeichnet, dass** die axiale Erstreckung der Trittglieder (5, 5') in Durchgangsrichtung (18) durch den Übergang (1) verläuft, wobei das erste Rahmenelement (6) an einem der beiden Fahrzeugteile (2, 3) bzw. an einem diesem zugeordneten Trägerelement (14) und das zweite Rahmenelement (7) am anderen der beiden Fahrzeugteile (2, 3) bzw. an einem diesem zugeordneten Trägerelement (14) angelenkt ist.

4. Übergang (1) nach einem der Ansprüche 1 bis 3, **dadurch gekennzeichnet, dass** die Gliederbrücke (4) dreiteilig ausgeführt ist, wobei das mittlere Gliederbrückenelement (12c) dieser Gliederbrücke (4) in die Wartungsposition (16) hochschwenkbar ist, während die benachbarten weiteren Gliederbrückenelemente (12a, 12b) von den Seitenabdeckelementen (9, 10) des Faltenbalgs (8) überlappt werden.

5. Übergang (1) nach einem der Ansprüche 1 bis 4, **dadurch gekennzeichnet, dass** das mindestens eine hochschwenkbare Gliederbrückenelement (12c) der Gliederbrücke (4) mittels Scharniervorrichtungen (13) an einem Trägerelement (14) eines der beiden Fahrzeugteile (2, 3) verschwenkbar angelenkt ist.

6. Übergang (1) nach Anspruch 5, **dadurch gekennzeichnet, dass** die Scharniervorrichtungen (13) an einem oder an beiden der jeweils gegenüberliegenden, die Trittglieder (5, 5') endseitig haltenden Rahmenelemente (6a/7a, 6b/7b, 6c/7c) angeordnet sind.

7. Übergang (1) nach einem der Ansprüche 1 bis 6, **dadurch gekennzeichnet, dass** die Gliederbrücke (4) in Durchgangsrichtung (18) des Übergangs (1) entgegen der Federkraft einer Federungsvorrichtung (44) um einen Verstellweg (x) beweglich ist, wobei vorzugsweise an beiden jeweils den Fahrzeugteilen (2, 3) zugewandten Endbereichen (4a, 4b) der Gliederbrücke (4) eine Federungsvorrichtung (44) vorgesehen ist.

8. Übergang (1) nach Anspruch 7, **dadurch gekennzeichnet, dass** die Federungsvorrichtung (44) mindestens eine in Richtung des jeweils benachbarten Fahrzeugteils (2, 3) gekrümmte Blattfeder (26) umfasst, wobei ein Mittelabschnitt (26c) der Blattfeder (26) am Trägerelement (14) des Fahrzeugteils (2, 3) angelenkt ist, während die Endbereiche (26a, 26b) der Blattfeder (26) an den Scharniervorrichtungen (13) oder an einem mit den Scharniervorrichtungen (13) verbundenen Schlitten (25) angelenkt sind, wobei der Schlitten (25) vorzugsweise leistenförmig ausgeführt ist und parallel zum Rahmenelement (6, 7) verläuft.

9. Übergang (1) nach Anspruch 7 oder 8, **dadurch gekennzeichnet, dass** der Verstellweg (x) kleiner oder gleich einem Kupplungsspiel zwischen den Fahrzeugteilen (2, 3) ist.

10. Übergang (1) nach einem der Ansprüche 1 bis 9, **dadurch gekennzeichnet, dass** der Faltenbalg (8) ein Versteifungsrahmenelement (22a) aufweist, welches unmittelbar oder mittelbar, vorzugsweise unter Zwischenlage eines Gleitelementes (40) an einem Seitenabschnitt (4c, 4d) der Gliederbrücke (4) auflagert.

11. Gliederbrücke (4) zur Verbindung zweier gelenkig miteinander verbundener Fahrzeugteile (2, 3) eines Schienenfahrzeugs, umfassend mehrere stabförmige Trittglieder (5, 5'), deren Endbereiche (5a, 5b) jeweils gelenkig an einem Rahmenelement (6, 7) angelenkt sind, wobei vorzugsweise zueinander benachbarte
Trittglieder (5, 5') einander im Bereich von Kontaktabschnitten (38, 38', 39, 39') kontaktierend überlappen, **dadurch gekennzeichnet, dass** die Gliederbrücke (4) in Richtung der Längserstreckung (a) der Gliederbrücke (4) in mehrere Gliederbrückenelemente (12a, 12b, 12c) geteilt ist, wobei zumindest eines dieser Gliederbrückenelemente (12a, 12b, 12c) mehrere endseitig in den gegenüberliegenden Rahmenelementen (6c, 7c) angelenkte Trittglieder (5, 5') umfasst und unabhängig von den jeweils benachbarten Gliederbrückenelementen (12a, 12b, 12c) um eine quer zur Längserstreckung (a) der Gliederbrücke (4) verlaufende Schwenkachse (11) in eine Wartungsposition (16) hochschwenkbar ist.

12. Gliederbrücke (4) nach Anspruch 11, **dadurch gekennzeichnet, dass** die Rahmenelemente (6, 7) im Wesentlichen parallel zur Schwenkachse (11) verlaufen.

13. Gliederbrücke (4) nach Anspruch 11 oder 12, **dadurch gekennzeichnet, dass** die Gliederbrücke (4) drei Gliederbrückenelemente (12a, 12b, 12c) aufweist, von denen zumindest das mittlere Gliederbrückenelement (12c) um die Schwenkachse (11) verschwenkbar ist, wobei seitliche Endbereiche (12c', 12c") des mittleren
Gliederbrückenelementes (12c) im Wesentlichen parallel zu einer Mittelachse (43) der Gliederbrücke (4) verlaufen.

14. Gliederbrücke (4) nach einem der Ansprüche 11 bis 13, **dadurch gekennzeichnet, dass** die Schwenkachse (11) des mindestens einen hochschwenkbaren Gliederbrückenelementes (12c) durch am Endbereich (4a, 4b) der Gliederbrücke (4) angeordnete, vorzugsweise öffenbare Scharniervorrichtungen (13) ausgebildet ist.

15. Gliederbrücke (4) nach Anspruch 14, **dadurch gekennzeichnet, dass** die Scharniervorrichtungen (13) an einem oder an beiden der jeweils gegenüberliegenden, die Trittglieder (5, 5') endseitig haltenden Rahmenelemente (6a/7a, 6b/7b, 6c/7c) angeordnet sind.

## Claims

1. A communication passage (1) between two vehicle parts (2, 3) of a railway vehicle which are connected in an articulated manner with one another, with a member bridge (4) being arranged between the vehicle parts (2, 3) which comprises several rod-shaped tread members (5, 5'), the end sections (5a, 5b) of which are each connected in an articulated manner to a frame element (6, 7), with the member bridge (4) being linked in a first end region (4a) to one of the two vehicle parts (2, 3) or to one support element (14) associated with the said member bridge, and in a second end region (4b) to the other of the two vehicle parts (2, 3) or to one support element (14) linked to the same, with the member bridge (4) being enclosed by a bellows (8) forming a transfer channel (17) between the vehicle parts (2, 3), and with mutually opposite side cover elements (9, 10) being arranged on the bellows (8), which side cover elements overlap at least in sections the member bridge (4) in the operating position (15) in the region of two side sections (4c, 4d) of the member bridge which are adjacent to the bellows (8), **characterized in that** the member bridge (4) is subdivided into several member bridge elements (12a, 12b, 12c) in the direction (18) of passage through the communication passage (1), with at least one of these member bridge elements (12a, 12b, 12c) comprising several tread members (5, 5') linked on the end side in the opposite frame elements (6, 7) and being upwardly swivellable about a swivel axis (11) extending transversally to the direction (18) of passage through the communication passage (1) independent of the respectively adjacent member bridge elements (12, 12b, 12c).

2. A communication passage (1) according to claim 1, **characterized in that** a maximum extension (b) of width of the at least one upwardly swivellable member bridge element (12c), as measured parallel to the swivel axis (11), is smaller than or equal to a minimum clearance (z) between the side cover elements (9, 10) of the bellows (8), which clearance is seen in a top view of the communication passage (1) and is also measured parallel to the swivel axis (11).

3. A communication passage (1) according to claim 1 or 2, **characterized in that** the axial extension of the tread members (5, 5') extends in the direction (18) of passage through the communication passage (1), with the first frame element (6) being connected in an articulated manner to one of the two vehicle parts (2, 3) or to a support element (14) associated with said frame element, and the second frame element (7) being connected in an articulated manner to the other of the two vehicle parts (2, 3) or to a support element associated with said frame element.

4. A communication passage (1) according to one of the claims 1 to 3, **characterized in that** the member bridge (4) is arranged in three parts, with the middle member bridge element (12c) of said member bridge (4) being upwardly swivellable to the maintenance position (16) while the adjacent further member bridge elements (12a, 12b) are overlapped by the side cover elements (9, 10) of the bellows (8).

5. A communication passage (1) according to one of the claims 1 to 4, **characterized in that** the at least one upwardly swivellable member bridge element (12c) of the member bridge (4) is swivellably linked by means of hinge apparatuses (13) to a support element (14) of one of the two vehicle parts (2, 3).

6. A communication passage (1) according to claim 5, **characterized in that** the hinge apparatuses (13) are arranged on one or both of the respectively opposite frame elements (6a/7a, 6b/7b, 6c/7c) which hold the tread members (5, 5') on the end side.

7. A communication passage (1) according to one of the claims 1 to 6, **characterized in that** in the direction (18) of passage of the communication passage (1) the member bridge (4) is movable over a displacement path (x) against the spring force of a suspension apparatus (44), with a suspension apparatus (44) preferably being provided in both end regions (4a, 4b) of the member bridge (4) which respectively face the vehicle parts (2, 3).

8. A communication passage (1) according to claim 7, **characterized in that** the suspension apparatus (44) comprises at least one leaf spring (26) curved in the direction of the respectively adjacent vehicle part (2, 3), with a middle section (26c) of the leaf spring (26) being connected in an articulated manner to the support element (14) of the vehicle part (2, 3), whereas the end sections (26a, 26b) of the leaf spring (26) are connected in an articulated manner to the hinge apparatuses (13) or a carriage (25) connected with the hinge apparatuses (13), with the carriage (25) preferably being arranged in the manner of a strip and extending parallel to the frame element (6, 7).

9. A communication passage (1) according to claim 7 or 8, **characterized in that** the displacement path (x) is smaller than or equal to a coupling play between the vehicle parts (2, 3).

10. A communication passage (1) according to one of the claims 1 to 9, **characterized in that** the bellows (8) comprises a stiffening frame element (22a) which rests directly or indirectly on a side section (4c, 4d) of the member bridge (4), preferably by interposing a sliding element (40).

11. A member bridge (4) for the connection of two mutually linked vehicle parts (2, 3) of a railway vehicle, comprising several rod-shaped tread members (5, 5') whose end sections (5a, 5b) are each articulated on a frame element (6, 7), with preferably mutually adjacent tread members (5, 5') overlapping one another in a contacting manner in the region of contact sections (38, 38', 39, 39'), **characterized in that** the member bridge (4) is subdivided into several member bridge elements (12a, 12b, 12c) in the direction of the longitudinal extension (a), with at least one of these member bridge elements (12a, 12b, 12c) comprising several tread members (5, 5') linked on the end side in the opposite frame elements (6c, 7c) and being upwardly swivellable to a maintenance position (16) about a swivel axis (11) extending transversally to the longitudinal extension (a) of the member bridge (4) independent of the respectively adjacent member bridge elements (12a, 12b, 12c).

12. A member bridge (4) according to claim 11, **characterized in that** the frame elements (6, 7) extend substantially parallel to the swivel axis (11).

13. A member bridge (4) according to claim 11 or 12,
**characterized in that** the member bridge (4) comprises three member bridge elements (12a, 12b, 12c), of which at least the middle member bridge element (12c) is swivellable about the swivel axis (11), with lateral end regions (12c', 12c") of the middle member bridge element (12c) extending substantially parallel to a central axis (43) of the member bridge (4).

14. A member bridge (4) according to one of the claims 11 to 13,
**characterized in that** the swivel axis (11) of the at least one upwardly swivellable member bridge element (12c) is formed by preferably openable hinge apparatuses (13) which are arranged on the end section (4a, 4b) of the member bridge (4).

15. A member bridge (4) according to claim 14, **characterized in that** the hinge apparatuses (13) are arranged on one or both of the respectively opposite frame elements (6a/7a, 6b/7b, 6c/7c) which hold the tread members (5, 5') on the end side.

## Revendications

1. Intercirculation (1) entre deux parties de véhicule (2, 3) articulées entre elles d'un véhicule ferroviaire, dans laquelle est disposé entre les parties de véhicule (2, 3) une passerelle articulée (4) qui comprend plusieurs éléments de passage (5, 5') en forme de barres, dont les parties d'extrémité (5a, 5b) sont articulées chacune sur un élément de cadre (6, 7), dans laquelle la passerelle articulée (4) est articulée dans une première partie d'extrémité (4a) sur l'une des deux parties de véhicule (2, 3) ou sur un élément portant (14) associé à celle-ci et dans une deuxième partie d'extrémité (4b) sur l'autre des deux parties de véhicule (2, 3) ou sur un élément portant (14) associé à celle-ci, dans laquelle la passerelle articulée (4) est entourée par un soufflet (8) formant un canal d'intercirculation (17) entre les parties de véhicule (2, 3) et dans laquelle sont disposés sur le soufflet (8) des éléments de couverture latérale (9, 10) se faisant face les uns aux autres, qui recouvrent au moins en partie la passerelle articulée (4) dans la position de service (15) au niveau de deux parties latérales de passerelle articulée (4c, 4d) voisines du soufflet (8), **caractérisée en ce que** la passerelle articulée (4) est partagée dans le sens du passage (18) à travers l'intercirculation (1) en plusieurs éléments de passerelle articulée (12a, 12b, 12c), l'un au moins de ces éléments de passerelle articulée (12a, 12b, 12c) comprenant plusieurs éléments de passage (5, 5') articulés aux extrémités dans les éléments de cadre (6, 7) se faisant face et pouvant être relevé indépendamment des éléments de passerelle articulée (12a, 12b, 12c) voisins autour d'un axe de pivotement (11) perpendiculaire au sens de passage (18) à travers l'intercirculation (1) dans une position d'entretien (16).

2. Intercirculation (1) selon la revendication 1, **caractérisée en ce qu'**une étendue maximale en largeur (b), mesurée parallèlement à l'axe de pivotement (11), de l'au moins un élément de passerelle articulée relevable (12c) est inférieure ou égale à une distance libre minimale (z) entre les éléments de couverture latérale (9, 10) du soufflet (8), en vue de dessus de l'intercirculation (1) et mesurée aussi parallèlement à l'axe de pivotement (11).

3. Intercirculation (1) selon la revendication 1 ou 2, **caractérisée en ce que** l'étendue axiale des éléments de passage (5, 5') est orientée dans le sens du passage (18) à travers l'intercirculation (1), le premier élément de cadre (6) étant articulé sur l'une des deux parties de véhicule (2, 3) ou sur un élément portant (14) associé à celle-ci et le deuxième élément de cadre (7) sur l'autre des deux parties de véhicule (2, 3) ou sur un élément portant (14) associé à celle-ci.

4. Intercirculation (1) selon l'une des revendications 1 à 3, **caractérisée en ce que** la passerelle articulée (4) est réalisée en trois parties, l'élément de passerelle articulée central (12c) de cette passerelle articulée (4) pouvant être relevé dans la position d'entretien (16) tandis que les autres éléments de passerelle articulée (12a, 12b) voisins sont recouverts par les éléments de couverture latérale (9, 10) du soufflet (8).

5. Intercirculation (1) selon l'une des revendications 1 à 4, **caractérisée en ce que** l'au moins un élément de passerelle articulée relevable (12c) de la passerelle articulée (4) est articulé au moyen de dispositif de charnière (13) sur un élément portant (14) de l'une des deux parties de véhicule (2, 3).

6. Intercirculation (1) selon la revendication 5, **caractérisée en ce que** les dispositifs de charnière (13) sont disposés sur l'un ou les deux des éléments de cadre (6a/7a, 6b/7b, 6c/7c) se faisant face et retenant les éléments de passage (5, 5') aux extrémités.

7. Intercirculation (1) selon l'une des revendications 1 à 6, **caractérisée en ce que** la passerelle articulée (4) est mobile dans le sens du passage (18) dans l'intercirculation (1) contre la force de ressort d'un dispositif d'amortissement (44) sur une course de déplacement (x), un dispositif d'amortissement (44) étant de préférence prévu aux deux parties d'extrémité (4a, 4b) de la passerelle articulée (4) tournées vers chacune des parties de véhicule (2, 3).

8. Intercirculation (1) selon la revendication 7, **caractérisée en ce que** le dispositif d'amortissement (44) comprend au moins un ressort à lames (26) courbé en direction de la partie de véhicule (2, 3) voisine, une partie médiane (26c) du ressort à lames (26) étant articulée sur l'élément portant (14) de la partie de véhicule (2, 3) tandis que les parties d'extrémité (26a, 26b) du ressort à lames (26) sont articulées sur les dispositifs de charnière (13) ou sur un chariot (25) relié aux dispositifs de charnière (13), lequel chariot (25) est de préférence réalisé en forme de bande et court parallèlement à l'élément de cadre (6, 7).

9. Intercirculation (1) selon la revendication 7 ou 8, **caractérisée en ce que** la course de déplacement (x) est inférieure ou égale à un jeu d'attelage entre les parties de véhicule (2, 3).

10. Intercirculation (1) selon l'une des revendications 1 à 9, **caractérisée en ce que** le soufflet (8) présente un cadre raidisseur (22a) qui repose directement ou indirectement, de préférence avec un élément de glissement (40) intercalé, sur une partie latérale (4c, 4d) de la passerelle articulée (4).

11. Passerelle articulée (4) pour la liaison de deux parties de véhicule (2, 3) articulées entre elles d'un véhicule ferroviaire, comprenant plusieurs éléments de passage (5, 5') en forme de barres dont les parties d'extrémité (5a, 5b) sont articulées chacune sur un élément de cadre (6, 7), dans laquelle les éléments de passage (5, 5') voisins se chevauchent de préférence en contact au niveau de parties de contact (38, 38' 39, 39'), **caractérisée en ce que** la passerelle articulée (4) est divisée dans le sens de la longueur (a) de la passerelle articulée (4) en plusieurs éléments de passerelle articulée (12a, 12b, 12c), l'un au moins de ces éléments de passerelle articulée (12a, 12b, 12c) comprenant plusieurs éléments de passage (5, 5') articulés sur les éléments de cadre (6c, 7c) se faisant face et pouvant être relevé indépendamment des éléments de passerelle articulée (12a, 12b, 12c) voisins autour d'un axe de pivotement (11) perpendiculaire à la longueur (a) de la passerelle articulée (4) dans une position d'entretien (16).

12. Passerelle articulée (4) selon la revendication 11, **caractérisée en ce que** les éléments de cadre (6, 7) sont pour l'essentiel parallèles à l'axe de pivotement (11).

13. Passerelle articulée (4) selon la revendication 11 ou 12, **caractérisée en ce que** la passerelle articulée (4) présente trois éléments de passerelle articulée (12a, 12b, 12c) dont au moins l'élément de passerelle articulée central (12c) peut pivoter autour de l'axe de pivotement (11), des parties d'extrémité latérales (12c', 12c") de l'éléments de passerelle articulée central (12c) étant pour l'essentiel parallèles à un axe médian (43) de la passerelle articulée (4).

14. Passerelle articulée (4) selon l'une des revendications 11 à 13, **caractérisée en ce que** l'axe de pivotement (11) de l'au moins un élément de passerelle articulée (12c) relevable est formé par des dispositifs de charnière (13) disposés sur la partie d'extrémité (4a, 4b) de la passerelle articulée (4) et pouvant de préférence être ouverts.

15. Passerelle articulée (4) selon la revendication 14, **caractérisée en ce que** les dispositifs de charnière (13) sont disposés sur l'un ou les deux des éléments de cadre (6a/7a, 6b/7b, 6c/7c) se faisant face et retenant les éléments de passage (5, 5') à leurs extrémités.
